Europäisches Patentamt

**European Patent Office**

**Office européen des brevets**

(11) Veröffentlichungsnummer: **0 029 493**
**B1**

# (12) EUROPÄISCHE PATENTSCHRIFT

(45) Veröffentlichungstag der Patentschrift:
**20.03.85**

(51) Int. Cl.⁴: **C 23 F  13/00**

(21) Anmeldenummer: **80105676.3**

(22) Anmeldetag: **22.09.80**

(54) Gegen Innenkorrosion geschützter Behälter.

(30) Priorität: **21.11.79  DE 2946900**

(43) Veröffentlichungstag der Anmeldung:
**03.06.81 Patentblatt 81/22**

(45) Bekanntmachung des Hinweises auf die Patenterteilung:
**20.03.85 Patentblatt 85/12**

(84) Benannte Vertragsstaaten:
**CH FR LI NL**

(56) Entgegenhaltungen:
**EP - A - 0 029 494**
**AT - B - 336 976**
**AT - B - 344 816**
**DE - B - 1 281 232**

(73) Patentinhaber: **Guldager Electrolyse GmbH & Co KG,
Postfach 141 Daimlerstrasse 13,
D-4660 Gelsenkirchen-Buer (DE)**

(72) Erfinder: **Heinzelmann, Ulrich, Dipl.-Chem., Liegnitzer
Strasse 8, D-4370 Marl (DE)**

(74) Vertreter: **Kluge, Heinz, Dr.-Ing., Fluhmattstrasse 37,
CH-5400 Baden (CH)**

**Beschreibung**

Die Erfindung bezieht sich auf einen gegen Innenkorrision geschützten Behälter mit unterschiedlichen Leitfähigkeitsschichten des Behälterinhalts, insbesondere Filterbehälter.

In Industrie, Gewerbe und Haushalt ist eine Vielzahl von Einrichtungen dem Korrosionsangriff durch wässrige Elektrolyte ausgesetzt. Die laufende Beseitigung der dadurch verursachten Schäden ist oft mit erheblichen Kosten verbunden. Aufgabe der Korrosionsschutztechnik ist es, derartige Schäden von vornherein auszuschliessen oder auf ein technisch und wirtschaftlich vertretbares Mindestmass zu beschränken.

Die elektrochemische Korrosion von Metallen und die zu ihrer Verhinderung angewendeten Schutzmassnahmen spielen sich an der Grenzfläche zwischen der festen Phase eines Metalls und der flüssigen Phase eines Elektrolyten ab. Fliesst ein Strom sowohl durch einen metallischen als auch einen elektrolytischen Leiter, so müssen an der Phasengrenze Metall/Elektrolyt freie Elektronen entstehen oder verbraucht werden. Da die Abgabe von Elektronen eine Oxydation, die Aufnahme eine Reduktion bedeutet, ist der Übergang eines Stroms über die Phasengrenze immer mit einer chemischen Reaktion verbunden. Dieser Vorgang wird als Elektrolyse bezeichnet, wenn die Reaktionen durch eine von aussen angelegte Spannung hervorgerufen werden. Verlaufen sie an räumlich getrennten Elektroden (aufgrund einer inneren EMK) freiwillig, so spricht man von einem galvanischen Element. Treten sie an einer Metalloberfläche gleichzeitig auf, so handelt es sich um Korrosion.

Die Metalle haben das Bestreben, in Lösung zu gehen. Aus dem Atomgitter der Metalle diffundieren positiv geladene Ionen, während die negativ geladenen Elektronen im Gitterverband bleiben. Das Metall lädt sich negativ auf. Hierdurch kommt es zu einer Potentialdifferenz gegenüber dem Elektrolyten. Das Metall geht an den unedleren Metallflächen (Anoden) in Lösung; der angreifende Elektrolyt nimmt an den edleren Metallflächen (Kathoden) Elektronen auf.

Die anodischen und kathodischen Teilreaktionen können in einer gleichen Zone der Metalloberfläche ablaufen. Im praktischen Korrosionsgeschehen ist es jedoch häufiger, dass anodische und kathodische Bezirke geometrisch getrennt auf der Metalloberfläche verteilt sind. Es bilden sich Lokal- oder Korrosionselemente mit entsprechenden Lokalanoden und Lokalkathoden, die gegenüber dem Elektrolyten ein unterschiedliches Potential aufweisen. Hierdurch kommt es zu einem Materialabtrag auf der unedleren Elektrode.

Beim passiven Korrisionsschutz trennt man durch Beschichtung die zu schützende Oberfläche von dem angreifenden Elektrolyten, beim aktiven Korrisionsschutz greift man direkt in die Korrosionsvorgänge ein. Als passiver Korrosionsschutz werden Überzüge aller Art eingesetzt: Anstrich- und Kunststoffüberzüge mit Schichtdicken von einigen μm bis zu einigen Millimetern, metallische Überzüge, Glasemail, Zementmörtel und dgl. Aktiver Korrosionsschutz erfolgt in der Hauptsache auf chemischem oder physikalischem Weg durch Zugabe von Korrisionsinhibitoren oder auf elektrochemischem Weg durch anodischen oder kathodischen Schutz, wobei bei letztgenanntem zwischen Schutzverfahren mit galvanischen (Opfer)- Anoden und solchen mit Fremdstrom zu unterscheiden ist.

Zum Innenschutz von Behältern hat sich seit einer Reihe von Jahren der kathodische Schutz mit fremdstromgespeisten, in den Behälter isoliert eingebauten Elektroden bewährt. Die Elektroden werden mit dem Pluspol einer Gleichstromquelle, der Behälter mit deren Minuspol verbunden. Durch die äussere Stromzufuhr werden die bei den kathodischen Teilreaktionen verbrauchten Elektronen ergänzt, wodurch die anodischen Teilreaktionen, d.h. die Metallauflösung der Behälterwandungen und -einbauten, verringert werden. Die Korrosion wird dann praktisch vollständig unterdrückt, wenn der von der Fremdstromquelle über die in den Behälter eingebaute (anodisch geschaltete) Elektrode in die Behälterwandungen bzw. Einbauten fliessende Strom seiner Grösse nach mindestens der kathodischen Teilstromstärke entspricht. Diese Stromstärke wird daher als Mindestbetriebsstromstärke des kathodischen Korrosionsschutzes $I_k$ bezeichnet. In der Praxis des kathodischen Korrosionsschutzes wird weniger der absolute Wert der Mindestbetriebsstromstärke $I_k$, vielmehr die sogenannte Mindestbetriebsstromdichte der Kathodisierung $i_k$ als Betriebsgrösse verwendet, welche den Quotienten aus $I_k$, gemessen in mA, und der Behälteroberfläche F einschliesslich seiner Einbauten, gemessen in m², darstellt.

Die Grösse $i_k$ ist von einer ganzen Reihe von Variablen abhängig, beispielsweise von der Konzentration an gelöstem Sauerstoff, der Konzentration an eventuell enthaltenen Oxydationsmitteln, der elektrolytischen Leitfähigkeit, der Temperatur, dem pH-Wert, der Strömungsgeschwindigkeit und dgl. Sie weist dementsprechend ein beträchtliches Spektrum auf, besitzt jedoch für einen ganz bestimmten Fall auch einen ganz bestimmten Wert. Dieser lässt sich labormässig bestimmen und in der Praxis durch Untersuchung des geöffneten Behälters in gewissen Zeitabsänden mit beliebiger Genauigkeit ermitteln. Für Wässer mittlerer Härte und üblicher Konzentration an gelöstem Sauerstoff liegen die $i_k$-Werte zwischen 80 mA/m² und 250 mA/m².

Bei konventionellen Behältern der Sanitär- und Heizungstechnik, z.B. bei Warmwasserbereitern, Boilern und dgl., bietet der kathodische Korrosionsschutz mit fremdstrombeaufschlagten Elektroden keine grundsätzlichen Probleme. Andere Verhältnisse ergeben sich jedoch bei Behältern, die neben dem wässrigen Elektrolyten weitere, gegenüber dem Elektrolyten besserleitende Stoffe, Materialien enthalten. Ein typischer Vertreter dieser Behältergattung ist beispielsweise ein Filterbehälter mit einer oder mehreren Aktivkohle-Filterschichten. Bei Filterbehältern mit Kiesschichten unterschiedlicher Körnung und einer oder mehreren Aktivkohleschichten hat man sich in der Vergangenheit darauf beschränkt, lediglich passive Korrosionsschutzmassnahmen durchzuführen oder, falls es die jeweiligen betrieblichen Verhältnisse zuliessen, dem wässrigen Elektrolyten Korrosionsinhibitoren beizufügen. So wurden die Behälter entweder aus einem korrosionsbeständigen Material, z.B. Edelstahl, Beton, gefertigt oder es wurden die Behälterinnenflächen mit Kunststoff-Schutzüberzügen versehen. Die Vorgehensweisen haben sich jedoch als wenig wirtschaftlich und z.T. unwirksam erwiesen: Hohe Investitionskosten bei Edelstahlbehältern, periodische Entleerung der Behälter und Erneuerung der Kunststoff-Schutzüberzüge, die infolge Wasserdampfdiffusion Fehlstellen aufweisen und ihrerseits zu Lochfrass in den Behälterwandungen führen.

Es ist Aufgabe der Erfindung, einen gegen Innenkorrosion geschützten Behälter der eingangs genannten Gattung zu schaffen, der durch fremdstromgespeiste Elektroden kathodisch geschützt ist.

Zur Lösung dieser Aufgabe ist erfindungsgemäss vorgesehen, dass im Behälter eine oder mehrere fremdstromgespeiste Inertanoden angeordnet sind, die Längsabschnitte unterschiedlicher elektrischer Oberflächenleitfähigkeit aufweisen, wobei der elektrische Oberflächenwiderstand eines Längsabschnittes umso höher ist, je grösser die elektrische Leitfähigkeit des diesem Längsabschnitt zugeordneten Behälterinhalts ist.

Eingehende theoretische Untersuchungen und praxisnah durchgeführte Versuche haben ergeben, dass weder in den Behältern vorhandene Füllmassen den Schutzstrom zu den kathodisch polarisierten Behälterinnenwandungen abschirmen, noch dass beim Betrieb und bei der Wartung der Behälter mechanische oder sonstige Beschädigungen der Inertanodenoberflächen auftreten. Passive Korrosionsschutzmassnahmen sind prinzipiell entbehrlich. Falls aus betrieblichen Gründen auf eine Beschichtung der Behälterinnenflächen nicht verzichtet werden kann, ermöglicht die Erfindung eine beträchtliche Verlängerung der Wartungs- und Inspektionszeiträume. Auch durch die Beschickung und den Betrieb der Behälter möglicherweise auftretende Beschädigungen der Beschichtungen führen nicht zu Korrosionsfolgeerscheinungen wie Lochfrass und dgl.

Die vorstehend aufgeführten vorteilhaften Wirkungen des Erfindungsgegenstandes kommen gerade bei Filterbehältern, die neben einer oder mehreren Kiesschichten eine oder mehrere Aktivkohleschichten als Filtermaterial enthalten, in besonderer Weise zur Geltung, da derartige Filter vergleichsweise häufig rückgespült werden müssen und/oder die Beschickung ausgetauscht wird. Aufgrund der gegenüber dem restlichen Behälterinhalt hohen elektrischen Leitfähigkeit der Aktivkohleschicht(en) sind die Inertanoden an den diesen Schichten zugeordneten Längsabschnitten derart ausgebildet, dass praktisch kein bzw. nur ein sehr geringer Schutzstrom aus der Anode austritt.

Während man bei Behältern mit einem Innendurchmesser kleiner oder gleich 1000 mm mit einer einzigen, sich im wesentlichen über die gesamte Behälterhöhe bzw. -länge erstreckenden zentralen Anode auskommt, sind bei grösseren Behältern eine Mehrzahl von im Behälter verteilter, untereinander elektrisch und gegebenenfalls mechanisch verbundener Anoden vorzusehen, die sich gleichfalls im wesentlichen über die gesamte Behälterhöhe bzw. -länge erstrecken.

Gemäss einer Weiterbildung des Erfindungsgegenstandes sind die Anodenlängsabschnitte unterschiedlicher elektrischer Oberflächenleitfähigkeit durch chemische und/oder elektrochemische Behandlung bzw. durch abschnittsweise Beschichtung von ansonsten gutleitenden Anoden mit Widerstandsmaterial und/oder Isoliermaterial gebildet. Eine andere Möglichkeit der Schaffung unterschiedlich elektrisch leitender Anodenabschnitte besteht darin, das Anodengrundmaterial abschnittsweise mit elektrisch gutleitenden Belägen oder Schichten zu versehen. Dies führt insbesondere bei Titananoden zu äusserst günstigen technischen und wirtschaftlichen Ergebnissen, wenn gemäss einer bevorzugten Ausgestaltung der Erfindung das Anodengrundmaterial Titan abschnittsweise mit einer 2,5 bis 10 μm dicken Platinschicht überzogen wird. Die von der Platinierung ausgesparten Anodenabschnitte überziehen sich unmittelbar nach dem Inbetriebsetzen der Anoden mit einem dünnen Oxydfilm mit vergleichsweise hohem Oberflächenwiderstand. Bei Filterbehältern mit Aktivkohleschichten, deren Leitfähigkeit diejenige des übrigen Behälterinhalts bei weitem übertrifft, wird somit ein übermässiger Stromaustritt aus den Anoden zuverlässig unterbunden.

Es hat sich ferner als besonders vorteilhaft erwiesen, bei Filterbehältern mit Aktivkohleschichten die diesen Schichten zugeordneten Anodenlängsabschnitte 100 bis 200 mm länger auszuführen als die Schichtdicke der Aktivkohle, wobei die Anodenlängsabschnitte die Aktivkohleschicht beidseitig überragen. Dieses beidseitige Überstehen der Anodenlängsabschnitte gewährleistet einen einwandfreien Betrieb auch während und nach den erforderlichen Rückspülungen der Filter, bei denen das Filtermaterial mehr oder weniger stark aufgewirbelt wird. Insbesondere beim Einsatz von platinierten Titananoden mit platinfreien, mit Titanoxyd bedeckten Anodenlängsabschnitten konnten keine Beschädigungen der platinierten und nicht platinierten Anoden während oder nach den Rückspülungen festgestellt werden. Es hat sich darüber hinaus gezeigt, dass derartige Anoden ohne Schaden zu nehmen nachträglich in bereits mit Filterschichten (Kies/Aktivkohle) beschickte Behälter eingerammt werden können. Hierbei können die Enden der Anoden pfahlförmig angespitzt werden.

Bei Behältern mit Innendurchmessern über 1000 mm werden eine Mehrzahl von Inertanoden im Behälter verteilt angeordnet.

Bei Behältern mit einer Gesamthöhe von 8 m und mehr und entsprechenden Anodenlängen führt der Spannungsabfall innerhalb der Anoden, insbesondere bei platinierten Titananoden, zu einer ungleichmässigen Stromverteilung. Da einer Steigerung der Betriebsspannung Grenzen gesetzt sind, werden gemäss einer Weiterbildung des Erfindungsgegenstandes in Anodenlängsrichtungen mehrere Stromzuführungen zu den Anoden vorgesehen. Zu diesem Zweck sind in der unteren und oberen Kümpelung entsprechend ausgebildete Stromdurchführungen vorgesehen. Gleichzeitig sind an der Behälterwand befestigte Mittel zum Halten und/oder Verspannen der Anodenstäbe bzw. -drähte vorgesehen.

Zur Vermeidung einer übermässigen Stromabsaugung an den Stromdurchführungen sind die Anoden in einem Bereich von 200–300 mm, gemessen ab Stromdurchführung, mit einer hochohmigen Schicht versehen. Bei Verwendung platinierter Titananoden sind diese Bereiche nicht platiniert.

Die Erfindung wird nachstehend anhand der Zeichnung, in der Ausführungsbeispiele des Erfindungsgegenstandes vereinfacht wiedergegeben sind, näher erläutert.

In der Zeichnung zeigt

Fig. 1 einen Längsschnitt durch einen Filterbehälter mit einer zentralen Anode,

Fig. 2 einen Längsschnitt durch eine platinierte Titananode,

Fig. 3 einen Horizontalschnitt durch einen Behälter mit rechteckförmigem Querschnitt,

Fig. 4 einen Horizontalschnitt durch einen Behälter mit kreisrundem Querschnitt,

Fig. 5 einen Längsschnitt durch einen stehenden Behälter,

Fig. 6 eine beispielsweise Ausführungsform einer Halte- und/oder Verspannvorrichtung für Drahtanoden,

Fig. 7 eine beispielsweise Ausführungsform einer Halte- und/oder Verspanneinrichtung für Stabanoden,

Fig. 8 einen Längsschnitt durch einen Tragbolzen einer Stromdurchführung.

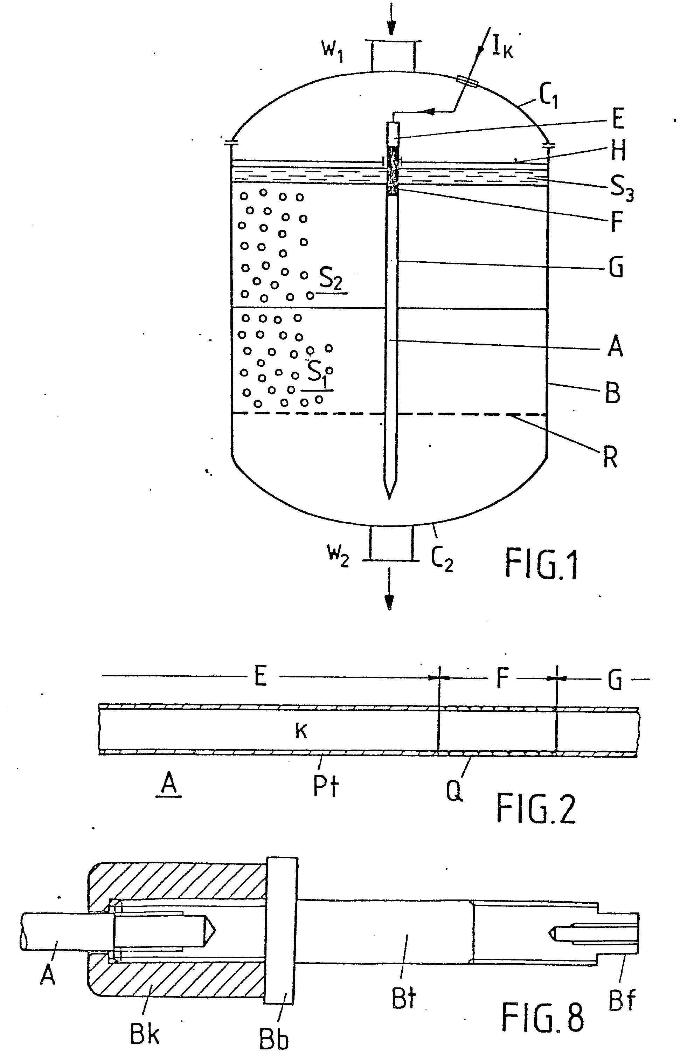

Im Filterbehälter B gemäss Fig. 1 liegen auf einem Düsenboden R Filterkiesschichten $S_1$, $S_2$ unterschiedlicher Körnung. Über der Schicht $S_2$ ist eine Aktivkohleschicht $S_3$ angeordnet. Die zu filtrierende Flüssigkeit wird am Stutzen $W_1$ in der oberen Kümpelung $C_1$ zugeführt und verlässt den Behälter durch den Stutzen $W_2$ in der unteren Kümpelung $C_2$. Eine zentral angeordnete Inertanode A ist mittels Halterungen H von den Behälterwandungen isoliert befestigt. Die Stromzufuhr der Anode erfolgt am oberen Anodenende, was durch den dort eingezeichneten Pfeil $I_k$ symbolisiert ist. Die Anode A hat Kreisquerschnitt mit einem Durchmesser von 10 mm und besteht, wie aus Fig. 2 hervorgeht, aus einem Titan- (bzw. Niob- oder Tantal-)Kern K, der in den Längsabschnitten E, G mit einer 2,5 bis 10 µm dicken Platinbeschichtung Pt versehen ist. In einem Längsabschnitt F, nämlich dort, wo die Anode im eingebauten Zustand die Aktivkohleschicht $S_3$ durchdringt, ist die Platinierung ausgespart. Im eingebauten Zustand und praktisch unmittelbar nach Inbetriebsetzung des kathodischen Schutzes bildet sich im Längsabschnitt F eine gegen chemische und physikalische Angriffe stabile Titanoxydschicht Q aus, deren Oberflächenwiderstand den Stromaustritt in diesem Bereich praktisch gänzlich verwehrt. Bei üblichen Schichtdicken der Aktivkohle von ca. 200 mm ist es vorteilhaft, die Länge des von der Platinierung ausgesparten Bereiches der Anode um 100 bis 200 mm länger zu gestalten als die Dicke der Aktivkohleschicht.

Die Anode A ist am unteren Ende pfahlförmig angespitzt. Auf diese Weise lässt sie sich ohne besonderen Aufwand in bereits mit Filtermaterial beschickte Filterbehälter einrammen. Dies ist insbesondere beim nachträglichen Einbau des kathodischen Korrosionsschutzes von Vorteil, jedoch auch dann, wenn die Anode und ihre Befestigungs- und Stromzuführungsteile bei der Auswechslung der Filterschichten hinderlich sein sollten.

Bei Filterbehältern mit mehreren Aktivkohleschichten sind selbstverständlich an den entsprechenden Orten der Anoden die oben beschriebenen Platinierungen fortzulassen.

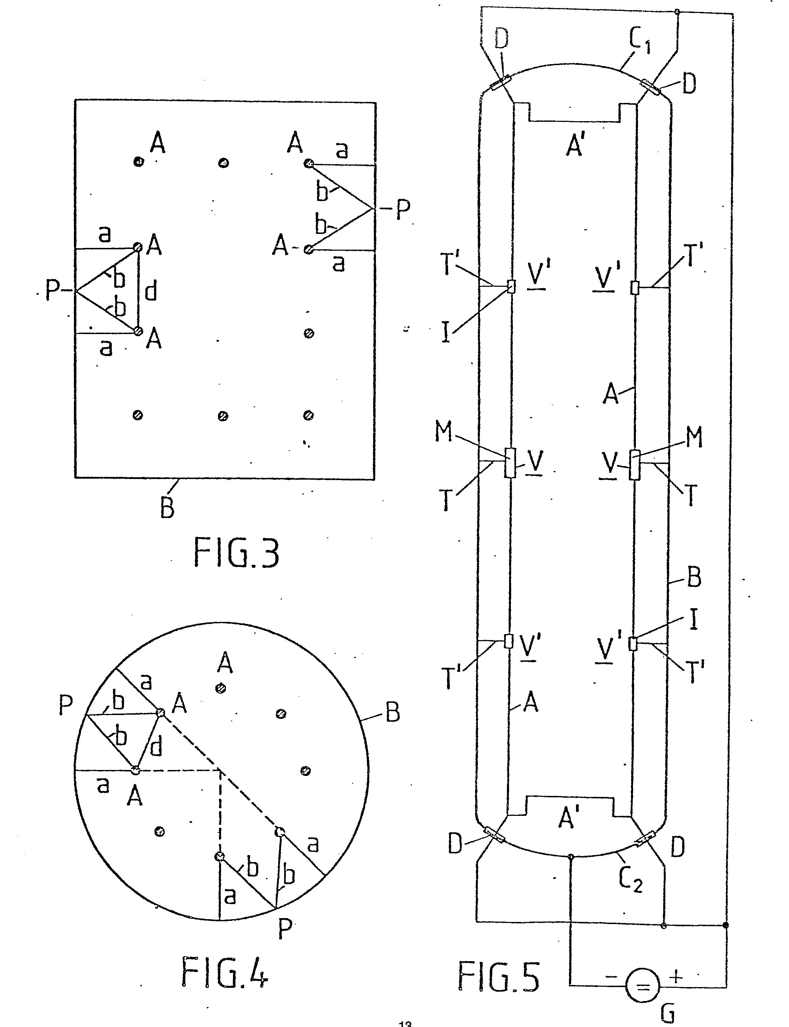

Bei Filterbehältern mit einem Innendurchmesser kleiner oder gleich 1000 mm lässt sich der kathodische Korrosionsschutz mit einer zentral angeordneten Inertanode erreichen. Bei darüber hinausgehenden Behälterdurchmessern wird der elektrische Widerstand des Elektrolyten so gross, dass eine zentral angeordnete und nur mit beschränkter Betriebsspannung beaufschlagte Anode zum optimalen kathodischen Korrosionsschutz der Behälterinnenwandungen nicht ausreicht. Für Filterbehälter mit einem Innendurchmesser grösser als 1000 mm werden daher mehrere Anoden gleichmässig im Behälter verteilt. Mögliche Anodenkonfigurationen bzw. Anordnungen sind in den Fig. 3 und 4 schematisch dargestellt.

In Fig. 3 sind in einen Behälter B mit rechteckförmigem Querschnitt eine Vielzahl von über den Umfang gleichmässig verteilter, platinierter Titananoden A von den Behälterwandungen isoliert eingebaut. Sämtliche Anoden sind an eine (nicht dargestellte) Gleichstromquelle angeschlossen. Der senkrechte Abstand der Anoden A von der Behälterwand ist mit a bezeichnet. Mit P sind Behälterpunkte bezeichnet, die von den beiden unmittelbar benachbarten Anoden A gleich grosse Abstände b aufweisen. Mit d sind die Anodenabstände bezeichnet.

Bei Behältern mit kreisrundem Querschnitt, wie sie in Fig. 4 schematisch dargestellt sind, sind gleiche Teile mit denselben Bezugzeichen versehen.

Bei dem in Fig. 5 dargestellten stehenden Behälter sind ebenfalls platinierte Titananoden A mit einer Anodenkonfiguration gemäss Fig. 4 eingebaut. Zusätzliche Anoden A' am oberen und unteren Behälterende dienen dem kathodischen Schutz der oberen und unteren Kümpelung $C_1$ bzw. $C_2$. Bei Behälterhöhen grösser als 8 m und dementsprechenden Anodenlängen ( $>$ 7500 mm)

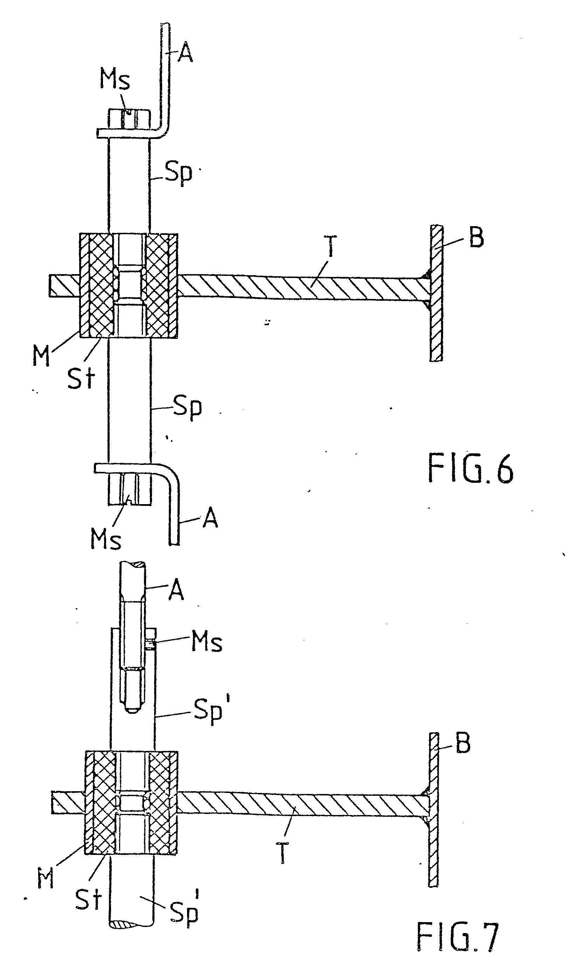

kann bei konventionellem Anodenaufbau (Kern aus Titan, 2,5 bis 10 μm dicke Platinbeschichtung) der Spannungsabfall in Anodenlängsrichtung derart grosse Werte annehmen, dass in dem der Anodenanspeiseseite abgewandten Behälterteil das erforderliche Anodenpotential für einen vollständigen kathodischen Schutz nicht mehr ausreicht. Bei derartigen Behältern wird der Schutzstrom den Anoden an einer Mehrzahl von räumlich getrennten Stellen zugeführt. Dies ist in Fig. 5 schematisch dargestellt. In der oberen und unteren Kümpelung des Behälters sind Stromdurchführungen D vorgesehen, die sämtlich parallelgeschaltet und mit dem Pluspol der Gleichstromquelle G verbunden sind. Der Minuspol der Gleichstromquelle G ist mit dem Behälter B verbunden. Die Anoden A sind im mittigen Bereich des Behälters unterteilt und dort mit einer kombinierten Halte- und Verspannvorrichtung V gehalten bzw. verspannt. Wie aus Fig. 5 bzw. 6 hervorgeht, ist in der Höhe der Trennungsstelle ein radial nach innen weisendes Trageisen T an der Behälterwand B befestigt. Am freien Ende des Trageisens T ist eine Muffe M befestigt. In die Muffe M ist ein Kunststoffstopfen St eingesetzt. Dieser weist eine durchgehende, in Anodenlängsrichtung verlaufende Gewindebohrung auf. Bei Verwendung von Anoden in Drahtform ist, wie Fig. 6 zeigt, in diese Gewindebohrung ein mit abgesetztem Gewinde versehener Titan-Spannbolzen Sp eingeschraubt, der an seinem freien Ende mit einer horizontalachsigen Bohrung versehen ist. Die Länge des Aussengewindes ist kleiner als die halbe Muffen- bzw. Stopfenlänge. Bei beidseitig eingeschraubten Anoden besteht somit keine elektrische Verbindung zwischen den Anodenteilen. Im Zuge der Montage der Anoden wird das zuvor rechtwinklig abgebogene Anodenende in die genannte Bohrung eingesetzt und mit einer Madenschraube Ms gesichert.

Zwischen den Stromdurchführungen D und den vorbeschriebenen Halte- und Verspannvorrichtungen V sind ferner eine oder mehrere Anodendistanzierungselemente V' angeordnet. Diese bestehen aus ebenfalls an den Behälterwandungen befestigten Trageisen T' (Fig. 5), deren freie Enden mit einer Isolierhülse I versehen sind, durch deren in Anodenlängsrichtung verlaufende Bohrung die Drahtanoden A gezogen sind.

Bei Stabanoden unterscheidet sich die in Behältermitte angeordnete Haltevorrichtung von der oben beschriebenen im wesentlichen durch die Ausbildung des Titanspannbolzens. Wie aus Fig. 7 hervorgeht, weist der Spannbolzen Sp' am muffenseitigen Ende ein Aussengewinde auf, während das andere Ende mit einer Sacklochgewindebohrung versehen ist. In diese Gewindebohrung werden mit Aussengewinde versehene Anoden eingeschraubt und durch eine radial wirkende Madenschraube Ms gesichert. Auch beim Einbau von Stabanoden können zusätzliche Distanzierungselemente für die Anoden zwischen den Stromdurchführungen D und Haltevorrichtungen verwendet werden, die im wesentlichen aus einem Trageisen und Isolierhülse zur Aufnahme der Anode bestehen.

Die Stromdurchführungen D sind ähnlich aufgebaut, wie sie in Fig. 2 des deutschen Gebrauchsmusters 1998 364 beschrieben und dargestellt sind. Der dort mit der Bezugsziffer 2 bezeichnete Tragbolzen wird jedoch ersetzt durch einen Titantragbolzen gemäss der vorliegenden Fig. 8. Der Bolzen Bt ist im mittleren Abschnitt mit einem Bund Bb versehen. Der zum Behälterinnern weisende linke Bolzenteil trägt ein Aussengewinde, auf das eine mit einem Innengewinde versehene Porzellankappe Bk aufgeschraubt ist. Die Porzellankappe weist eine axial verlaufende Bohrung auf, deren Durchmesser geringfügig grösser ist als der Aussendurchmesser der Titanspannbolzen Sp und Sp' gemäss Fig. 6 bzw. 7. In einer am besagten Bolzenende eingebrachten Sacklochgewindebohrung werden bei Drahtanoden Titanspannbolzen Sp gemäss Fig. 6 eingeschraubt, an denen die Draht- bzw. Stabanoden ihrerseits befestigt werden. Stabanoden können direkt in die Sacklochgewindebohrung eingeschraubt werden. Mit Hilfe des anderen Bolzenteils, das teilweise mit einem Aussengewinde versehen ist, wird die Stromdurchführung an der Behälterwand bzw. der Kümpelung isoliert befestigt, wie es im vorgenannten Gebrauchsmuster beschrieben ist. In Abweichung zu dieser bekannten Stromdurchführung erfolgt jedoch der Kabelanschluss mit Hilfe einer Gewindesacklochbohrung am nach aussen weisenden Bolzenende, das zusätzlich mit einer Abflachung Bf zum Gegenhalten versehen ist.

Die Halte- bzw. Verspannvorrichtungen für Draht- und Stabanoden und die zugehörigen Stromdurchführungen sind einfach im Aufbau und werden den Gegebenheiten bei Einbau der kathodischen Schutzanlage am Herstellungs- oder Montageort in optimaler Weise gerecht.

Abschliessend sei noch auf die europäische Patentanmeldung EP-A-80 105 677.1 mit gleichem Prioritätstag hingewiesen. Während im vorliegenden Fall die Hauptaufgabe darin besteht, einen gegen Korrosion geschützten Behälter mit unterschiedlichen Leitfähigkeitsschichten des Behälterinhalts durch fremdstromgespeiste Elektroden zu schützen, ist es Hauptaufgabe der vorgenannten Anmeldung, in Behältern, welche durch fremdstromgespeiste Elektroden kathodisch geschützt sind, eine optimale Stromverteilung mit einer minimalen Anodenanzahl zu erreichen.

**Patentansprüche**

1. Gegen Innenkorrosion geschützter Behälter mit unterschiedlichen Leitfähigkeitsschichten des Behälterinhalts, insbesondere Filterbehälter, dadurch gekennzeichnet, dass im Behälter (B) eine oder mehrere fremdstromgespeiste Inertanoden (A) angeordnet sind, die Längsabschnitte (E, F, G) unterschiedlicher elektrischer Oberflächenleitfähigkeit aufweisen, wobei der elektrische Oberflächenwiderstand eines Längsabschnitts umso höher ist, je grösser die elektrische Leitfähigkeit des diesem Längsabschnitt zugeordneten Behälterinhalts ist.

2. Behälter nach Anspruch 1, dadurch gekennzeichnet, dass bei Behältern mit einem Innendurchmesser kleiner oder gleich 1000 mm eine sich im wesentlichen über die gesamte Behälterhöhe bzw. Behälterlänge erstreckende zentrale Anode (A) vorgesehen ist.

3. Behälter nach Anspruch 1, dadurch gekennzeichnet, dass bei Behältern mit einem Innendurchmesser grösser als 1000 mm eine Mehrzahl von im Behälter verteilten Anoden (A) vorgesehen ist, die sich im wesentlichen über die gesamte Behälterhöhe bzw. Behälterlänge erstrecken.

4. Behälter nach einem der Ansprüche 1 bis 3, dadurch gekennzeichnet, dass die Anodenlängsabschnitte (E, F, G) unterschiedlicher elektrischer Oberflächenleitfähigkeit durch abschnittsweise Beschichtung von ansonsten elektrisch gutleitenden Anoden (A) mit Widerstandsmaterial und/oder Isoliermaterial gebildet sind.

5. Behälter nach einem der Ansprüche 1 bis 3, dadurch gekennzeichnet, dass die Anodenlängsabschnitte (E, F, G) unterschiedlicher elektrischer Oberflächenleitfähigkeit durch chemische und/oder elektrochemische Behandlung der jeweiligen Abschnitte gebildet sind.

6. Behälter nach Anspruch 5, dadurch gekennzeichnet, dass die Anoden (A) im wesentlichen aus Titan, Niob oder Tantal bestehen und abschnittsweise mit einer 2,5 μm bis 10 μm dicken Platinschicht (Pt) überzogen sind.

7. Behälter nach einem der vorangegangenen Ansprüche 1 bis 6, dadurch gekennzeichnet, dass bei Filterbehältern, die eine Aktivkohleschicht ($S_3$) enthalten, der dieser Schicht zugeordnete Anodenlängsabschnitt (F) eine Schicht (Q) hohen elektrischen Oberflächenwiderstandes aufweist.

8. Behälter nach Anspruch 7, dadurch gekennzeichnet, dass der der Aktivkohleschicht ($S_3$) zugeordnete Anodenlängsabschnitt 100 bis 200 mm länger ist als die Dicke der Aktivkohleschicht und diese beiseitig überragt.

9. Behälter nach einem der vorangegangenen Ansprüche 1 bis 8, dadurch gekennzeichnet, dass die Anoden (A) pfahlförmig ausgebildet sind und von der Beschickungsseite des Behälters in die Beschickung eingerammt sind.

10. Behälter nach einem oder mehreren der vorangegangenen Ansprüche 1 bis 9, dadurch gekennzeichnet, dass die Stromzufuhr zu den Anoden (A) mit Hilfe von in der Behälterwand (B) oder den Kümpelungen ($C_1$, $C_2$) eingebauter Stromdurchführungen (D) erfolgt, wobei die Anoden (A) in einem Bereich von 200 bis 300 mm, gemessen ab Stromdurchführung (D), mit einer hochohmigen Schicht überzogen sind.

11. Behälter nach Anspruch 10, dadurch gekennzeichnet, dass bei Verwendung von platinierten Titananoden in dem genannten Bereich die Anoden (A) frei von Platinierung sind.

12. Behälter nach einem oder mehreren der vorangegangenen Ansprüche 1 bis 11, dadurch gekennzeichnet, dass mindestens an einem Behälterende eine Stromdurchführung (D) vorgesehen ist.

13. Behälter nach Anspruch 12, dadurch gekennzeichnet, dass die Stromdurchführung einen in der Behälterwand oder Behälterkümpelung isoliert befestigten, vorzugsweise aus Titan bestehenden Tragbolzen (Bt) umfasst, an dessen nach dem Behälterinneren weisendem Ende bei Drahtanoden ein ebenfalls vorzugsweise aus Titan bestehender Spannbolzen (Sp) befestigt ist, an dem seinerseits die Anoden (A) angebracht sind, während Stabanoden direkt im Tragbolzen befestigt sind.

14. Behälter nach einem oder mehreren der vorangegangenen Ansprüche 1 bis 13, dadurch gekennzeichnet, dass die Anoden (A) zusätzlich durch Halte- und/oder Verspannvorrichtungen (N) und/oder Anodendistanzierungselemente (V') im Behälter (B) gehalten sind.

15. Behälter nach Anspruch 14, dadurch gekennzeichnet, dass die Halte- und/oder Verspannvorrichtung einen an der Behälterwand befestigten Tragarm (T) umfasst, an dessen freiem Ende ein vorzugsweise aus Titan bestehender Spannbolzen (Sp) isoliert befestigt ist, an dem seinerseits die Anode (A) angebracht ist.

16. Behälter nach Anspruch 15, dadurch gekennzeichnet, dass das besagte Tragarmende eine Muffe (M) trägt, in die Bohrung der Muffe ein Stopfen (St) aus Isoliermaterial eingesetzt ist und der Stopfen mit einer in Anodenlängsrichtung verlaufenden Bohrung zur Aufnahme des Spannbolzens (Sp) versehen ist.

17. Behälter nach einem der Ansprüche 13 bis 16, dadurch gekennzeichnet, dass Mittel (Ms) zur Sicherung der Anode (A) am anodenseitigen Ende der Spannbolzen (Sp) vorgesehen sind.

18. Behälter nach Anspruch 14, dadurch gekennzeichnet, dass die Anodendistanzierungselemente (V') einen an der Behälterwand befestigten Tragarm (T') umfassen, dessen freies Ende eine Isolierhülse (I) trägt, durch deren in Anodenlängsrichtung verlaufende Bohrung die Anode (A) durchgeführt ist.

19. Behälter nach einem oder mehreren der vorangegangenen Ansprüche 12 bis 18, dadurch gekennzeichnet, dass bei Behältern, deren Anodenlängen 7500 mm überschreiten, in Längsrichtung der Anoden (A) mehrere Stromdurchführungen (D) vorgesehen sind.

20. Behälter nach Anspruch 19, dadurch gekennzeichnet, dass die Stromdurchführungen in den Behälterkümpelungen ($C_1$, $C_2$) angeordnet sind, die Anoden an den Halte- und /oder Verspannvorrichtungen (N) elektrisch voneinander isoliert sind und der Schutzstrom ($I_k$) den so gebildeten Teilanoden getrennt zugeführt wird.

21. Behälter nach Anspruch 20, dadurch gekennzeichnet, dass die Teilanoden bezüglich der Gleichstromquelle (G) elektrisch parallelgeschaltet sind.

## Claims

1. Container, protected from internal corrosion, comprising layers of differing conductivity in the contents of the container, particularly a filter container, characterised in that one or more inert anodes (A), supplied by parasitic current, are situated in the container (B), these anodes having longitudinal sections (E, F, G) of differing electrical surface conductivity and the electrical surface resistance of any longitudinal section being the higher, the greater the electrical conductivity of the contents of the container, associated with that longitudinal section.

2. Container according to Claim 1, characterised in that, for containers having an internal diameter of less than, or equal to, 1000 mm, a central anode (A), extending essentially over the entire height of the container or length of the container, is provided.

3. Container according to Claim 1, characterised in that, for containers having an internal diameter of more than 1000 mm, a plurality of anodes (A), distributed in the container and extending essentially over the entire height of the container or length of the container, are provided.

4. Container according to any one of Claims 1 to 3, characterised in that the longitudinal anode sections (E, F, G) of differing electrical surface conductivity are formed by sectional coating of anodes (A) of otherwise good electrical conductivity with resistance material and/or insulating material.

5. Container according to any one of Claims 1 to 3, characterised in that the longitudinal anode sections (E, F, G) of differing electrical surface conductivity are formed by chemical and/or electrochemical treatment of the particular sections.

6. Container according to Claim 5, characterised in that the anodes (A) consist essentially of titanium, niobium or tantalum and are coated in sections with a platinum layer (Pt), 2.5 µm to 10 µm thick.

7. Container according to any one of the preceding Claims 1 to 6, characterised in that, in the case of filter containers, containing an activated charcoal layer ($S_3$), the longitudinal anode section (F), associated with that layer, possesses a layer (Q) of high electrical surface resistance.

8. Container according to Claim 7, characterised in that the longitudinal anode section, associated with the activated charcoal layer ($S_3$), has a length 100 to 200 mm greater than the thickness of the activated charcoal layer and projects beyond the latter on both sides.

9. Container according to any one of the preceding Claims 1 to 8, characterised in that the anodes (A) are designed in the shape of piles and are driven into the charge from the loading side of the container.

10. Container according to one or more of the preceding Claims 1 to 9, characterised in that current is supplied to the anodes (A) with the aid of current passages (D), incorporated in the container wall (B) or the flanges ($C_1$, $C_2$), the anodes (A) being coated with a high-resistance layer within in a range of 200 to 300 mm, measured from the current passage (D).

11. Container according to Claim 10, characterised in that, when platinized titanium anodes are used in the zone mentioned, the anodes (A) are free from platinization.

12. Container according to one or more of the preceding Claims 1 to 11, characterised in that a current passage (D) is provided at least at one end of the container.

13. Container according to Claim 12, characterised in that the current passage comprises a carrier bolt (Bt), fixed with insulation in the container wall or container flange and preferably consisting of titanium, to whose end pointing towards the interior of the container a clamping bolt (Sp) is fixed in the case of wire anodes, the clamping bolt also consisting preferably of titanium and having, in turn, the anodes (A) fixed to it, whereas rod anodes are fixed directly in the carrier bolt.

14. Container according to one or more of the preceding Claims 1 to 13, characterised in that the anodes (A) are supported in the container (B), in addition, by means of support and/or clamping devices (V) and/or anode spacer elements (V').

15. Container according to Claim 14, characterised in that the support and/or clamping device comprises a carrier arm (T), which is fixed to the container wall and to whose free end a clamping bolt (Sp) is fixed with insulation, which clamping bolt consists preferably of titanium and has, in turn, the anode (A) fixed to it.

16. Container according to Claim 15, characterised in that said end of the carrier arm carries a sleeve (M), a stopper (St), made from insulating material, is inserted into the bore of the sleeve and the stopper is provided with a bore, running in the longitudinal direction of the anode, for receiving the clamping bolt (Sp).

17. Container according to one of the Claims 13 to 16, characterised in that means (Ms) are provided for securing the anode (A) to the end of the clamping bolts (Sp) nearest the anode.

18. Container according to Claim 14, characterised in that the anode spacer elements (V') comprise a carrier arm (T'), which is fixed to the container wall and whose free end carries an insulating sleeve (I), through whose bore, running in the longitudinal direction of the anode, the anode (A) is passed.

19. Container according to one or more of the preceding Claims 12 to 18, characterised in that several current passages (D) are provided in the longitudinal direction of the anodes (A) for containers, the anode lengths of which exceed 7500 mm.

20. Container according to Claim 19, characterised in that the current passages are situated in the container flanges ($C_1$, $C_2$), the anodes are electrically insulated from one another at the support and/or clamping devices (V), and the protective current ($I_k$) is supplied separately to the partial anodes thus formed.

21. Container according to Claim 20, characterised in that the partial anodes are connected electrically in parallel with respect to the source of direct current (G).

## Revendications

1. Récipient protégé contre la corrosion interne dont le contenu comprend des couches de conductibilités différentes, notamment récipient de filtrage, caractérisé en ce que le récipient (B) contient une ou plusieurs anodes inertes (A) alimentées par du courant extérieur, et en ce que les sections de longueur (E, F, G) présentent une conductibilité électrique superficielle différente, la résistance électrique superficielle d'une section étant d'autant plus élevée que la conductibilité électrique du contenu du récipient qui lui correspond est élevée.

2. Récipient selon la revendication 1, caractérisé en ce que, dans le cas où c'est un récipient d'un diamètre inférieur ou égal à 1000 mm, il comporte une anode centrale (A) s'étendant pratiquement sur toute la hauteur du récipient ou sur toute sa longeur.

3. Récipient selon la revendication 1, caractérisé en ce que, dans le cas où c'est un récipient d'un diamètre intérieur supérieur à 1000 mm, il comporte une pluralité d'anodes (A) réparties dans ledit récipient, qui s'étendent pratiquement sur toute la hauteur ou toute la longueur du récipient.

4. Récipient selon l'une des revendications 1 à 3, caractérisé en ce que les sections de longueur d'anode (E, F, G) de conductibilité électrique superficielle différente sont formées par application par sections sur des anodes (A) conduisant sinon bien le courant, d'une couche de matière résistante et/ou de matière isolante.

5. Récipient selon l'une des revendications 1 à 3, caractérisé en ce que les sections de longueur d'anode (E, F, G) de conductibilité électrique superficielle différente sont formées par traitement chimique et/ou électrochimique de chacune des sections.

6. Récipient selon la revendication 5, caractérisé en ce que les anodes (A) sont essentiellement en titane, en niobium ou en tantale et sont recouvertes par sections d'une couche de platine (Pt) de 2,5 à 10 microns d'épaisseur.

7. Récipient selon l'une des revendications 1 à 6, caractérisé en ce que, dans le cas où c'est un récipient de filtrage qui contient une couche de charbon actif (S3), la section de longueur d'anode (F) correspondant à cette couche comporte une couche (Q) de résistance électrique superficielle élevée.

8. Récipient selon la revendication 7, caractérisé en ce que la section de longueur d'anode correspondant à la couche de charbon actif (S3) a une longeur supérieure de 100 à 200 mm à l'épaisseur de la couche de charbon actif et dépasse de celle-ci des deux côtés.

9. Récipient selon l'une des revendications 1 à 8, caractérisé en ce que les anodes (A) sont en forme de bâtons et s'enfoncent dans le chargement à partir du côté de chargement du récipient.

10. Récipient selon une ou plusieurs des revendications précédentes, caractérisé en ce que l'amenée de courant aux anodes (A) est effectuée au moyen de traversées (D) insérées dans la paroi (B) du récipient ou dans les emboutissages (C1, C2), les anodes (A) étant recouvertes d'une couche de forte résistance dans une zone de 200 à 300 mm, mesurée à partir de la traversée (D).

11. Récipient selon la revendication 10, caractérisé en ce que lorsqu'on utilise des anodes de titane platinée dans la zone indiquée, les anodes (A) sont dépourvues de platinage.

12. Récipient selon une ou plusieurs des revendications 1 à 11, caractérisé en ce qu'il comporte une traversée (D) au moins à l'une de ses extrémités.

13. Récipient selon la revendication 12, caractérisé en ce que la traversée comprend un boulon de support (Bt), de préférence en titane, fixé de façon à être isolé dans la paroi du récipient ou dans son emboutissage, à l'extrémité dirigée vers l'intérieur du récipient duquel, dans le cas d'anodes en fil métallique, est fixé un boulon de tension (Sp), également de préférence, en titane, sur lequel, quant à lui, les anodes (A) sont placées, tandis que des anodes en forme de barreaux sont fixées directement dans le boulon de support.

14. Récipient selon une ou plusieurs des revendications 1 à 13, caractérisé en ce que les anodes (A) sont maintenues en plus dans le récipient (B) par des dispositifs de retenue et/ou d'haubanage (V) et/ou des éléments d'écartement d'anodes (V').

15. Récipient selon la revendication 14, caractérisé en ce que le dispositif de retenue et/ou d'haubanage comprend un bras de support (T) fixé à la paroi du récipient, à l'extrémité libre duquel est fixé de façon isolée un boulon de tension (Sp), de préférence, en titane, sur lequel l'anode (A) est, quant à elle, placée.

16. Récipient selon la revendication 15, caractérisé en ce que ladite extrémité du bras de support comporte un manchon (M), en ce qu'un bouchon (St) en matière isolante est inséré dans l'alésage du manchon, et en ce que le bouchon comporte un alésage dirigé dans la direction longitudinale de l'anode pour recevoir le boulon de tension (Sp).

17. Récipient selon l'une des revendications 13 à 16, caractérisé en ce qu'il comporte des moyens (Ms) pour fixer l'anode (A) à l'extrémité du boulon de tension (Sp) située du côté de l'anode.

18. Récipient selon la revendication 14, caractérisé en ce que les éléments d'écartement d'anode (V') comprennent un bras de support (T') fixé á la paroi du récipient, dont l'extrémité libre comporte une douille isolante (I) par l'alésage dirigé dans la direction longitudinale de l'anode de laquelle passe l'anode (A).

19. Récipient selon une ou plusieurs des revendications 12 à 18, caractérisé en ce que les récipients dont les longueurs d'anode sont supérieures à 7 500 mm comportent dans la direction longitudinale des anodes (A) plusieurs traversées (D).

20. Récipient selon la revendication 19, caractérisé en ce que les traversées se trouvent dans les emboutissages (C1, C2) du récipient, en ce que les anodes sont isolées électriquement entre elles sur les dispositifs de retenue et/ou d'haubanage ( V), et en ce que le courant de protection (Ik) est amené séparément aux anodes partielles ainsi formées.

21. Récipient selon la revendication 10, caractérisé en ce que les anodes partielles sont montées électriquement en parallèle par rapport à la source de courant continu (G).

FIG.1

FIG.2

FIG.8

0 029 493

FIG.3

FIG.4

FIG.5

13

FIG.6

FIG.7